# EUROPEAN PATENT SPECIFICATION

(11) **EP 1 432 747 B1**
(45) Date of publication and mention of the grant of the patent: **11.05.2011**
(21) Application number: 01970900.5
(22) Date of filing: 14.09.2001
(51) Int. Cl.: C08F 255/00, C08F 255/02, C08L 51/06, C10M 145/00

(54) **MULTIFUNCTIONAL VISCOSITY INDEX IMPROVER AND DISPERSANT**
MULTIFUNKTIONELLE VISKOSITÄTSINDEXVERBESSERER UND DISPERSIONSMITTEL
ADDITIFS AMELIORANTS ET DISPERSANTS MULTIFONCTIONS DE L'INDICE DE VISCOSITE

(43) Date of publication of application: 30.06.2004
(73) Proprietor: Chemtura Corporation, Middlebury, CT 06749 (US)
(72) Inventor: DUYCK, Karl, Waterbury, CT 06708 (US); NALESNIK, Theodore, E., Hopewell Junction, NY 12533 (US); TRAN, Uyen, Thanh, Sandy Hook, CT 06482 (US)
(74) Representative: Schön, Christoph
(86) International application number: PCT/US2001/028606
(87) International publication number: WO 2003/025034

(56) References cited:
- EP-A- 0 500 314
- DE-A- 19 845 289
- US-A- 3 928 497
- US-A- 4 089 794
- US-A- 4 160 739
- US-A- 4 161 452
- US-A- 4 517 104
- US-A- 4 624 992
- US-A- 4 693 838
- US-A- 4 929 682
- US-A- 5 298 565

## Description

### 1. Field of the Invention

The present invention relates to polymeric viscosity index improver/dispersant additives for lubricating oils. More particularly, the present invention relates to processes for preparing grafted, and optionally amine-functionalized, hydrocarbon polymers and their use in oil compositions, and includes a solution process for grafting unsaturated moieties onto the hydrocarbon polymer by carrying out the graft reaction in a solution medium comprising at least one aromatic ester.

### 2. Description of Related Art

High molecular weight hydrocarbon polymers, such as hydrogenated copolymers of isoprene and butadiene, copolymers of butadiene and styrene, and ethylene copolymers, particularly ethylene-propylene copolymers are known as viscosity index (V.I.) improving additives for oil compositions, particularly lubricating oil compositions. A substanial body of prior art exists directed towards further reacting these V.I. improvers to form multi-functional V.I. improvers. A multifunctional V.I. improver is a material that improves not only the V.I. properties of the oil, but also imparts dispersancy so as to suspend sludge that may form during the operation or use of the lubricant and to inhibit varnish deposition in engines.

U.S. Patent No. 3,928,497 discloses a process for preparing a graft-modified ethylene polymer or copolymer which comprises reacting an ethylene polymer or copolymer with a dicarboxylic acid graft-copolymerizable therewith, or its graft-copolymerizable derivative in an alkyl-substituted aromatic hydrocarbon solvent in the presence of a radical initiator, characterized in that the reaction is performed while adding the dicarboxylic acid or its derivative gradually to the solvent in which the starting ethylene polymer or copolymer is present.

U.S. Patent No. 4,089,794 discloses ethylene copolymers derived from 2 to 98 wt. % ethylene, and one or more C₃ to C₂₈ alpha olefins, e.g. ethylene-propylene, that are solution-grafted under an inert atmosphere and at elevated temperatures with an ethylenically-unsaturated carboxylic acid material in the presence of a high-temperature decomposable free-radical initiator and thereafter reacted with a polyfunctional material reactive with carboxy groups; such as (a) a polyamine, or (b) a polyol, or (c) a hydroxyamine, or mixtures thereof, to form carboxyl-grafted polymeric derivatives, which have good engine sludge and varnish control behavior in fuels and lubricating oils. If the molecular weight is above 10,000, then these polymers are also useful as multifunctional viscosity index improvers.

U.S. Patent No. 4,517,104 discloses oil soluble viscosity index improving ethylene copolymers, such as copolymers of ethylene and propylene; and ethylene, propylene and diolefin; etc., that are reacted or grafted with ethylenically unsaturated carboxylic acid moieties, preferably maleic anhydride moieties, and reacted with polyamines having two or more primary amine groups and a carboxylic acid component, preferably alkylene polyamine and alkenyl succinic anhydride, such as polyisobutenyl succinic anhydride. Or the grafted ethylene copolymer can be reacted with already formed salts, amides, imides, of said polyamine and acid component, preferably imides of alkylene polyamine and alkenyl succinic anhydride. These reactions are said to permit the incorporation of varnish inhibition and dispersancy into the ethylene copolymer while inhibiting cross-linking with resulting viscosity increase, haze or gelling. The aforesaid grafting reaction may be carried out thermally, or more preferably with a free radical initiator, such as a peroxide, in a mineral lubricating oil, in which case the acid component, preferably also acts to solubilize insoluble compounds formed by side reactions, such as maleic anhydride grafted oil molecules reacted with amine, to thereby inhibit haze formation, particularly when preparing oil concentrates of the V.I.-dispersant additive for later addition to lubricating oils.

US Patent N°·4624992 discloses a process comprising solution grafting a hydrocarbon polymer with unsaturated carboxilic acid materials in the presence of aromatic ester oil. US Patent N°·4929682 discloses a process for grafting maleic anhydride onto olefinic polymers in the presence of aliphatic or aromatic Ketone. US Patent N°·4160739 discloses polyolefinic copolymer additives for lubricants and fuels comprising graft copolymers.

U.S. Patent No. 4,693,838 discloses hydrocarbon polymers, such as ethylene copolymers, that may be reacted with unsaturated nitrogen-containing monomers or unsaturated carboxylic acids in a synthetic hydrocarbon lubricating oil in the presence of a free radical initiator such as a peroxide. The copolymer grafted directly with the nitrogen-containing monomers may be utilized as an additive for oil compositions, particularly lubricating oil compositions as a V.I.-dispersant additive. The polymer reacted with carboxylic acid may be further reacted with amines or amino-alcohols to also form a multifunctional V.I.-dispersant additive.

The disclosures of the foregoing are incorporated herein by reference in their entirety.

### SUMMARY OF THE INVENTION

In accordance with the present invention, hydrocarbon polymers, such as ethylene-alpha olefin copolymers and terpolymers, are reacted with unsaturated carboxylic acids in at least one aromatic ester solvent and/or diluent in the presence of a free radical initiator, such as a peroxide. The polymer, after having been reacted with the carboxylic acid, may be further reacted with amines or amino-alcohols to also form a multifunctional V.I.-dispersant additive. Hydrocarbon polymers such as ethylene-alpha olefin copolymers and terpolymers may also be reacted with unsaturated nitrogen-containing monomers in an aromatic ester in the presence of a free radical initiator, such as a peroxide. The copolymer grafted directly with the nitrogen-containing monomers may be utilized as an additive for oil compositions, particularly lubricating oil compositions as a V.I.-dispersant additive.

More particularly, the present invention is directed to a process comprising solution grafting a hydrocarbon polymer prepared from at least one C₂ to C₂₈ polymerizable hydrocarbon, said polymer having a number average molecular weight in the range of from 5,000 to 500,000, with an ethylenically unsaturated C₃ to C₁₀ carboxylic acid material, using a free radical initiator, in the presence of an aromatic ester oil of the formula 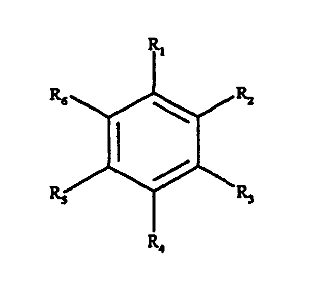 wherein R₁, R₂, R₃, R₄, R₃, and R₆ are independently selected from the group consisting of hydrogen, -COOR₇, -COOR₈, -COOR₉, -COOR_{10,} -COOR₁₁, and -COOR₁₂, provided that no more than 5 of R₁, R₂, R₃, R₄, R₅, and R₆ are hydrogen, and R₇, R₈, R₉, R₁₀, R₁₁, and R₁₂ are independently selected from the group consisting of alkyl and alkylesters, whereby the aliphatic portion of the aromatic ester is derived from a linear C₄ to C₁₃ alcohol.

### DESCRIPTION OF THE PREFERRED EMBODIMENTS

The present invention provides a process for preparing a dispersant-viscosity index improver by grafting an unsaturated acid onto a high molecular weight hydrocarbon polymer in an aromatic ester in the presence of a free radical initiator and then, further reacting the product with an amine or polyol. The high molecular weight hydrocarbon polymer is of high viscosity even at grafting temperatures, so that dilution is required for processing. Mineral (or synthetic) lubricating oil can be added to form a finished additive concentrate after grafting with the unsaturated acid or, if the product is to be further reacted, such as to form a functionalized derivative, the mineral (or synthetic) oil can be used as another diluent to carry out the additional reaction and to form a useful additive concentrate.

The aromatic ester is preferably one having a low viscosity index and good oxidative stability. It is preferably a phthalate, mellitic, or terephthalate ester. The aliphatic portion of the ester is derived from a linear C₄ to C₁₃ alcohol. By grafting in an aromatic ester, it appears that little, if any, of the ester undergoes grafting. Therefore, most, if not all, of the grafting that is occurring will take place on the hydrocarbon polymer. This provides a significant improvement over the use of mineral oil as solvent, since the mineral oil may undergo grafting. Grafted mineral oil molecules are generally of too low a molecular weight to be effective as dispersants, and, in fact, will generally have a negative effect on dispersancy.

The use of mineral oil as solvent for the grafting will also produce oil insoluble by-products causing excess sediment and requiring more extensive filtration. By using an ester compatible with mineral lubricating oil and thereby minimizing low molecular weight insoluble components, sediment and haze can be substantially reduced and the unsaturated carboxylic acid and, if present, the nitrogen-containing species are more efficiently utilized.

Polymers used in the practice of the present invention typically have a number average molecular weight of from 5000 to 500,000, preferably 10,000 to 200,000, more preferably from 20,000 to 100,000 and will generally have a narrow range of molecular weight.

Examples of suitable hydrocarbon polymers include homopolymers and copolymers of two or more monomers of C₂ to C₂₈, preferably C₂ to C₈ olefins, including both alpha olefins and internal olefins, which may be straight or branched, aliphatic, aromatic, alkylaromatic, cycloaliphatic, and the like. Preferably, they will be copolymers of ethylene with C₃ to C₂₈ olefins, more preferably copolymers of ethylene and propylene. Other hydrocarbons that can be used include styrene, butene, isobutylene, C₆ and higher alpha olefins, atactic isoprene, butadiene.

The preferred polymers are prepared from ethylene and ethylenically unsaturated hydrocarbons including cyclic, alicyclic and acyclic materials containing from 3 to 28 carbon atoms, preferably 3 to 18 carbons. These ethylene copolymers may contain from 15 to 90 wt. % ethylene, preferably 30 to 80 wt. % of ethylene and 10 to 85 wt. %, preferably 20 to 70 wt. % of one or more C₃ to C₂₈, preferably C₃ to C₁₈, more preferably C₃ to C₈, alpha olefins. Copolymers of ethylene and propylene are most preferred. Other alpha-olefins suitable in place of propylene to form the copolymer, or to be used in combination with ethylene and propylene, to form a terpolymer, tetrapolymer, etc., include 1-butene, 1-pentene, 1-hexene, 1-heptene, 1-octene, 1-nonene, 1-decene, etc.; also branched chain alpha olefins, such as 4-methyl-1-pentene, 4-methyl-1-hexene, 5-methylpentene-1, 4,4-dimethyl-1-pentene, and 6-methylheptene-1, and mixtures thereof.

The polymers, which term is intended to include copolymers, terpolymers, tetrapolymers, used in the practice of the present invention can include one or more non-conjugated diolefins. The amount of non-conjugated diolefin will generally range from 0.5 to 20 mole percent, preferably 1 to 7 mole percent, based on the total amount of hydrocarbon, e.g., ethylene and alpha-olefin present.

Representative examples of non-conjugated dienes that can be used include 1,4-hexadiene; 1,5-heptadiene; 1,6-octadiene; 5-methyl-1,4-hexadiene; 3,7-dimethyl 1,6-octadiene; 3,7-dimethyl 1,7-octadiene; mixed isomers of dihydro-myrcene and dihydro-cymene; 1,4-cyclohexadiene; 1,5-cyclooctadiene; 1,5-cyclo-dodecadiene; 4-vinylcyclohexene; 1-allyl, 4-isopropylidene cyclohexane; 3-allyl-cyclopentene; 4-allyl cyclohexene; 1-isopropenyl-4-(4-butenyl) cyclohexane; 4,4'-dicyclopentenyl diene; 4,4'-dicyclohexenyl diene; tetrahydroindene; methyl tetrahydroindene; dicyclopentadiene; bicyclo (2.2.1) hepta-2,5-diene; ethyl norbornene; 5-methylene-6-methyl-2-norbornene; 5-methylene-6, 6-dimethyl-2-norbornene; 5-propenyl-2-norbornene; 5-(3-cyclopentenyl)-2-norbornene; 5-cyclohexylidene-2-norbornene; norbornadiene.

The compounds that can be grafted onto the hydrocarbon polymer preferably contain from 3 to 10 carbon atoms, ethylenic unsaturation, and at least one, preferably two, carboxylic acid groups, or an anhydride group, or a polar group convertible into such carboxyl groups as by oxidation or hydrolysis. Maleic anhydride or a derivative thereof is preferred as it does not homopolymerize appreciably, but attaches to the polymer to provide two carboxylic acid functionalities. Alternative examples include chloromaleic anhydride, itaconic anhydride, hemic anhydride, maleic acid, fumaric acid, monoesters of the foregoing.

As taught by U.S. Patent Nos. 4,160,739 and 4,161,452, various other unsaturated comonomers can be grafted on the hydrocarbon polymer together with the unsaturated acid component. One or a mixture of such comonomers that are different from the unsaturated acid component and contain a copolymerizable double bond and are copolymerizable with the unsaturated acid component can be used. Such comonomers normally do not contain free carboxylic acid groups, but can be esters containing α,β-ethylenic unsaturation in the acid or alcohol portion; hydrocarbons, both aliphatic and aromatic, containing α,β-ethylenic unsaturation, such as the C₄ -C₁₂ alpha olefins, for example, isobutylene, hexene, nonene, dodecene, and the like; styrenes, for example, styrene, α-methyl styrene, p-methyl styrene, *p-*sec-butyl styrene, and the like, and vinyl monomers, for example, vinyl acetate, vinyl chloride, methyl vinyl ketone, ethyl vinyl ketone.

Nitrogen-containing unsaturated compounds are well known for forming polymers useful as oil additives. These monomers can be grafted onto the hydrocarbon polymer and include, among others, those having from 6 to 30 carbon atoms and from 1 to 4 nitrogen atoms.

Examples of such nitrogen-containing monomers include dimethylaminoethyl methacrylate; dimethylaminoethyl acrylate; N-(1,1-dimethyl-3-oxobutyl)acrylamide; N-(1,2-dimethyl-1-ethyl-3-oxobutyl) acrylamide; N-(1,3-diphenyl-1-methyl-3-oxoproyl) acrylamide; N-(1-methyl-1phenyl-3-oxobutyl)methacrylamide; N,N-diethylaminoethyl acrylamide; 2-hydroxyethyl acrylamide; acrylamide; N-dimethylaminopropyl methacrylamide; N-vinylcaprolactams; N-vinylpyrrolidone, N-vinylthiopyrrolidone, 3-methyl-1-vinylpyrrolidone, 4-methyl-1-vinylpyrrolidone, 5-methyl-1-vinylpyrrolidone, 3-ethyl-1-vinylpyrrolidone, 3-butyl-1-vinylpyrrolidone, 3,3-dimethyl-1-vinylpyrrolidone, 4,5-dimethyl-1-vinylpyrrolidone; 2-vinylpyridine, 4-vinylpyridine; 2-methyl-5-vinylpyridine; 2-methyl-4-vinylpyridine; 2-vinyl-5-ethyl pyridine; 2-vinyl-6-methylpyridine.

The grafting is carried out using one or more free radical initiators, such as azoisobutyronitrile; 2,5-dimethyl-hex-3-yne-2, 5 bis(t-butyl peroxide) or its hexane analogue, di-t-butyl peroxide, dicumyl peroxide. The initiator is preferably a peroxide and is generally used at a level of between 0.005% and 1%, based on the total weight of the polymer solution, and temperatures of 25° to 250° C., preferably 100° to 250° C.

The ethylenically unsaturated carboxylic acid material, which is preferably maleic anhydride, will generally be used in an amount ranging from 0.05 % to 10 %, preferably 0.1 to 4.0 %, based on weight of the initial solution. The carboxylic acid material and free radical initiator are generally used in a weight percent ratio range of 3:1 to 30:1, preferably 1:1 to 6:1.

The initiator grafting is preferably carried out in an inert atmosphere, such as that obtained by nitrogen blanketing. While the grafting can be carried out in the presence of air, the yield of the desired graft polymer is generally thereby decreased as compared to grafting under an inert atmosphere substantially free of oxygen. The grafting time will usually range from 0.1 to 12 hours, preferably from 0.5 to 10 hours, more preferably 0.5 to 3 hours.

The grafted polymer is reacted with a suitable amine in a conventional manner using reactants and conditions known in the art. Useful amine compounds include mono- and polyamines having from 2 to 60, preferably from 3 to 20, total carbon atoms and from 1 to 12, preferably from 2 to 7 nitrogen atoms in the molecule. These amines can be hydrocarbyl amines or hydrocarbyl amines having additional groups, such as alkoxy groups, amide groups, imidazoline groups.

Useful amines include 1,2-diaminoethane; 1,3-diaminopropane; 1,4-diamonobutane; 1,6-diaminohexane; diethylene triamine; triethylene tetramine; tetraethylene pentamine; 1,2-propylene diamine; di-(1,2-propylene) diamine; di-(1,2-propylene)triamine; di-(1,3-propylene) triamine; N,N-dimethyl-1,3-diaminopropane; N,N-di(2-aminoethyl) ethylene diamine; N,N-di(2-hydroxyethyl) 1,3-propylene diamine; 3-dodecyloxy-propylamine; N-dodecyl-1,3-propane diamine; tris hydroarymethylaminomethane; diisopropanol amine; diethanol amine; triethanol amine; mono-, di-, and tri-tallow amines; N-(3-aminopropyl)morpholine; 3-dodecyloxypropylamine; N-(2-aminoethyl) morpholine; 2-amino pyridine, 2-methylamino pyridine; 3-methylamino pyridine; 2-aminothiazole; 2-amino-2thiazoline; 2-amino pyrimidine; 2-amino benzothiazole; methyl-1-phenyl hydrazine; para-morpholino aniline; N-aminopropyl imidazole and variants thereof, N-aminopropyl pyrrolidone and variants thereof; N-aminopropyl piperidine and variants thereof; N-phenyl phenylenediamine.

Especially preferred are amines having a single primary amine group, with any other amine groups present being tertiary amine groups. This inhibits cross-linking which is particularly important when the polymer has a relatively high degree of acidity, e.g. above 0.1 meq./g. of polymer. Mixtures comprising 70 wt. % or more of amines having only a single primary or secondary group can be used with small amounts of amines having two or more primary or secondary amine groups. Acidities below 0.1 meq./g. polymer are less sensitive to cross-linking and amines with 2 or more reactive groups, i.e. either primary or secondary amine groups, or both primary and secondary amine groups, or a primary amine group and an alcohol group, can be used.

The amines will generally be used in the range of from 0.1 to 10 wt. %, preferably from 0.5 to 5 wt. %, based on the weight of the hydrocarbon polymer. The amine is preferably used in an amount that neutralizes the acid moieties by formation of amides, imides, or salts.

Preferably, the amount of amine used is such that there is 1 to 2 moles of polyamine reacted per equivalent mole of dicarboxylic acid. For example, with an ethylene-propylene copolymer of 40,000 number average molecular weight, grafted with an average of 4 maleic anhydride groups per molecule, preferably 4 to 8 molecules of amine are used per molecule of grafted ethylene-propylene copolymer.

The polymer, grafted with acidic moieties, preferably in solution generally equal to 5 up to 50 wt. %, preferably 10 to 30 wt. % polymer, can be readily reacted with amines by heating at a temperature of from 100° C to 250° C, preferably from 120° to 230° C, for from 0.5 to 10 hours, preferably from 1 to 6 hours. The heating is preferably carried out to favor formation ofimides and amides. Reaction ratios can vary considerably, depending upon the reactants, amounts of excess, type of bonds formed.

In a preferred embodiment, 5 to 95 wt % of the copolymer is dissolved in 95 to 5 wt. % of the aromatic ester to form a solution along with 0.05 to 10 wt. % of the unsaturated material and 0.005 to 10 .wt. % of the initiator based on the weight of the solution. Then, after the grafting step, 40 to 500 wt. %, based upon the weight of the solution, of a mineral or synthetic lubricating oil is added, followed by the addition of an amine to neutralize the acid and heating at 100° C to 250° C for 0.5 to 10 hours.

The advantages and the important features of the present invention will be more apparent from the following examples.

### EXAMPLES

A series of products was prepared as detailed in Examples 1 through 3 below. The procedure in all cases was performed in two steps.

In the first step, the grafting solvent media were added to 375 g of ethylene-propylene copolymer (EP) (in which the polymer substrate consisted of 57 mole percent ethylene and 43 mole percent propylene having a number average molecular weight of 20,000), in a one to three ratio, and heated to 180° C with stirring, under a nitrogen blanket, until the EP was dissolved. Maleic anhydride was added, as a thirty percent concentrate in a carrier solvent, at a rate of 0.604 g/min over one hour. Peroxide catalyst (di-t-butyl peroxide) was added concurrently in a ratio of 2.43 with respect to the maleic anhydride to be added. After the additions were completed, the reaction mass was post-reacted for a period of time sufficient to ensure the decomposition of all peroxide. This was followed by vacuum stripping, with a nitrogen sparge to remove residual maleic anhydride. After the grafting reaction was completed, there was added a sufficient amount of solvent neutral 100 (SN100), a paraffinic mineral oil, to bring the polymer content to 50 % to facilitate handling. In the second step, the maleated polymer in oil was stirred with an equal amount of SN100 oil and heated to 160° C under a nitrogen blanket. Neutralization was then carried out with an equimolar amount of amine based on the charged maleic anhydride, followed by a nitrogen sparge for three hours to strip out water produced by the reaction. Dinonyl phenol was then added, in a ratio of 2 with respect to the amine charged, as a co-solvent. Each product was then cooled and filtered through a 100 mesh screen.

### Example 1

EP was grafted in the presence of dibutyl phthalate as the grafting solvent medium and derivatized with N-(4-anilinophenyl)-3-aminobutanamide according to the above-described procedure. The product will be referred to herein as Prodex 1.

### Example 2

EP was grafted in the presence of di-undecyl phthalate as the grafting solvent medium and derivatized with N-(4-anilinophenyl)-3-aminobutanamide according to the above-described procedure. The product will be referred to herein as Prodex 2.

### Example 3

EP was grafted in the presence of di-isodecyl phthalate as the grafting solvent medium and derivatized with N-(4-anilinophenyl)-3-aminobutanamide according to the above-described procedure. The product will be referred to herein as Prodex 3.

### Example 4

### Comparative Example

EP was grafted in the presence of solvent neutral 100 (SN100) as the grafting solvent medium, as disclosed in U.S. Patent No. 4,517,104, and derivatized with N-(4-anilinophenyl)-3-aminobutanamide. The product will be referred to herein as Prodex 4.

### Deposit Control Test

### Thermo-oxidative Engine Oil Simulation Test (TEOST)

### TEOST Formulation

The additives were tested for effectiveness in a motor oil formulation (See description in Table 1 and compared to an identical formulation.

| Table 1 | |
|---|---|
| SAE 10W-30 Motor Oil Formulation (Base Blend) | |
| | Weight Percent |
| Solvent Neutral 100 | Balance |
| Overbased Calcium Sulfonate Detergent | 1.3 |
| Rust/Corrosion Inhibitor | 0.75 |
| Antioxidant | 0.5 |
| Pour Point Depressant | 0.1 |
| OCP VI Improver | 5.5 |
| ZDDP | 0.8 |
| Example X | 2.5 |

The Deposit control properties of the above examples were determined in the Thermo-Oxidative Engine Oil Simulation Test (TEOST). The test is used to determine the amount of deposits formed by automotive engine oils, and is run as a version of ASTM test D6335-98 with the number of cycles increased to increase the severity of the test.

In this test, a sample of engine oil at a temperature of 100° C that contains ferric naphthenate and is in contact with nitrous oxide and moist air is pumped at a set flow rate past a tared depositor rod. The rod is resistively heated through 9.5 minute temperature cycles that go from 200-480° C. When all cycles are completed, the rod is rinsed of oil residue and dried to obtain a gross mass. The oil sample is flushed from the system and passed through a tared filter. The mass of deposits on the rod and filter is the total deposit mass. Performance is measured as total deposit mass in milligrams with results typically between 10 and 100. The lower the number versus the reference, the better the performance of the oil formulation. Table 2 lists the parameters for the TEOST as performed, with results for the graft and derivatized polymer in mineral oil samples (Examples 1-4) found in Table 3. Results are the average of two runs on two separate blends.

| Table 2 | |
|---|---|
| TEOST Parameters | |
| Conditions | Setting |
| Reactor Temperature | 100° C |
| Temperature Cycle | 200-400° C |
| Number of Cycles | 25 |
| Cycle time | 9.5 min |
| Oil Flow Rate | 0.45 mL/min |
| Oil Volume | 116 mL |
| N₂O/moist air Flow Rate | 3.5 mL/min |
| Catalyst (Iron naphthenate) | 100 ppm |

| Table 3 | | | |
|---|---|---|---|
| TEOST Results | | | |
| Example | Description | Deposits (mg) | % Deposit Decrease |
| 5 | Base Blend¹ | 70.2 | N.A. |
| 6 | Base Blend with Prodex 1 | 37.5 | 46.6 |
| 7 | Base Blend with Prodex 2 | 36.4 | 48.1 |
| 8 | Base Blend with Prodex 3 | 34.8 | 50.0 |
| 9 | Base Blend with Prodex 4 | 42.6 | 39.3 |

| | | | |
|---|---|---|---|
| ¹Base Blend refers to the formulation in Table 1. | | | |

It can be seen from the above data that using the phthalate esters as the grafting solvent media for grafting reduces the total deposit mass. For instance, the addition of Prodex 3 to the base blend reduces deposit formation by 50 percent while the addition of Prodex 4 (comparative) to the base blend reduced deposit formation by only 39.3 percent.

### Physical Properties

### Kinematic Viscosity/Hunter Colorimeter Haze Test

The kinematic viscosity and haze value of the products of Examples 1 through 4 were measured. Kinematic viscosity was measured at 100° C and is reported in Centistokes. The additive concentrates were placed into 2-cm polystyrene tissue culture flasks to determine haze value using a Hunter Colorimeter.

| Table 4 | | | |
|---|---|---|---|
| Haze and Kinematic Viscosity | | | |
| Example | Description | Haze Value | Viscosity |
| 10 | Prodex 1 | 20.6 | 679 |
| 11 | Prodex 2 | 12.9 | 792 |
| 12 | Prodex 3 | 12.9 | 811 |
| 13 | Prodex 4 | 59.0 | 651 |

As can be seen, using the phthalate ester as a grafting solvent medium has no appreciable effect on the viscosity of the final product, but can improve the haze value significantly versus using mineral oil as the .grafting solvent medium.

## Claims

1. A process comprising solution grafting a hydrocarbon polymer prepared from at least one C₂ to C₂₈ polymerizable hydrocarbon, said polymer having a number average molecular weight in the range of from 5,000 to 500,000, with an ethylenically unsaturated C₃ to C₁₀ carboxylic acid material, using a free radical initiator, in the presence of an aromatic ester oil of the formula 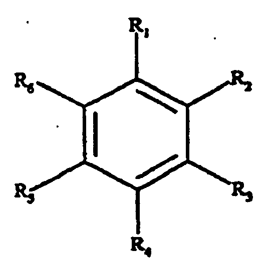 wherein R₁, R₂, R₃, R₄, R₅, and R₆ are independently selected from the group consisting of hydrogen, -COOR₇, -COOR₈, -COOR₉, -COOR₁₀, -COOR₁₁, and -COOR₁₂, provided that no more than 5 of R₁, R₂, R₃, R₄, R₅, and R₆ are hydrogen, and R₇, R₈, R₉, R₁₀, R₁₁, and R₁₂ are independently selected from the group consisting of alkyl and alkylesters, whereby the aliphatic portion of the aromatic ester is derived from a linear C₄ to C₁₃ alcohol, comprising a step of dissolving 5 to 95 wt % of the copolymer in 95 to 5 wt. % of the aromatic ester to form a solution, the amount of the unsaturated material is 0.05 to 10 wt. % based upon the weight of the solution, and the amount of the initiator is 0.005 to 10 wt. % based on the weight of the solution; and after the grafting step, a step of adding 40 to 500 wt. % based upon the weight of the solution, of mineral or synthetic lubricating oil, and then adding an amine to neutralize the acid and heating at 100 °C to 250 °C for 0.5 to 10 hours.

2. The process of claim 1, wherein the hydrocarbon polymer is a copolymer of ethylene with a C₃ to C₂₈ alpha olefin.

3. The process of claim 2 wherein the copolymer comprises from 15 to 90 weight percent ethylene and, correspondingly, from 85 to 10 weight percent of the alpha olefin.

4. The process of claim 2 or 3 wherein the C₃ to C₂₈ alpha olefin is propylene.

5. The process of claim 1, wherein the copolymer is grafted with the unsaturated material by dissolving the copolymer in the aromatic ester and adding the unsaturated material and free radical initiator over 0.1 to 12 hours at a temperature of from 25 °C to 250 °C.

6. The process of claim 1. wherein the unsaturated material is maleic anhydride and the amine is N- (4-anitinophenyl)-3-aminobutanamide.

7. The process of claim 1, wherein the unsaturated material is a nitrogen-containing ethylenically unsaturated monomer.

8. The process of claim 7, wherein the nitrogen-containing monomer is selected from the group consisting of vinyl pyridines, vinyl pyrrolidones, vinyl imidazoles, and amine group-containing acrylates and methacrylates.

## Patentansprüche

1. Verfahren, das ein Lösungspfropfen eines aus mindestens einem 2 bis 28 Kohlenstoffatome aufweisenden polymerisierbaren Kohlenwasserstoff hergestellten Kohlenwasserstoffpolymers, wobei das Polymer ein anzahlgemitteltes Molekulargewicht im Bereich von 5.000 bis 500.000 aufweist, mit einem ethylenisch ungesättigten 3 bis 10 Kohlenstoffatome aufweisenden Carbonsäurematerial unter Verwendung eines Radikalstarters in Gegenwart eines aromatischen Esteröls der folgenden Formel umfasst: 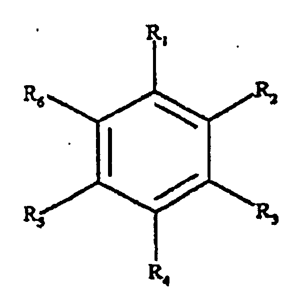 worin R₁, R₂, R₃, R₄, R₅ und R₆ unabhängig voneinander aus der Gruppe ausgewählt sind, die aus Wasserstoff, -COOR₇, -COOR₈, -COOR₉, -COOR₁₀, -COOR₁₁ und -COOR₁₂ besteht, wobei gilt, dass nicht mehr als 5 von R₁, R₂, R₃, R₄, R₅ und R₆ für Wasserstoff stehen, und R₇, R₈, R₉, R₁₀, R₁₁ und R₁₂ unabhängig aus der Gruppe ausgewählt sind, die aus Alkyl und Alkylestern besteht, wobei der aliphatische Bereich des aromatischen Esters von einem linearen C₄-C₁₃-Alkohol herrührt, umfassend eine Stufe des Lösens von 5 bis 95 Gew.-% des Copolymers in 95 bis 5 Gew.-% des aromatischen Esters unter Bildung einer Lösung, wobei die Menge des ungesättigten Materials 0,05 bis 10 Gew.-%, bezogen auf das Gewicht der Lösung, beträgt und die Menge des Starters 0,005 bis 10 Gew.-%, bezogen auf das Gewicht der Lösung, beträgt; und nach der Pfropfungsstufe eine Stufe des Zugebens von 40 bis 500 Gew.-%, bezogen auf das Gewicht der Lösung, eines mineralischen oder synthetischen Schmieröls und anschließend eines Zugebens einer Amins zum Neutralisieren der Säure und eines Erwärmens während 0,5 bis 10 h auf 100 bis 250 °C.

2. Verfahren nach Anspruch 1, wobei das Kohlenwasserstoffpolymer ein Copolymer von Ethylen mit einem 3 bis 28 Kohlenstoffatome aufweisenden α-Olefin ist.

3. Verfahren nach Anspruch 2, wobei das Copolymer 15 bis 90 Gew.-% Ethylen und entsprechend 85 bis 10 Gew.-% des α-Olefins umfasst.

4. Verfahren nach Anspruch 2 oder 3, wobei das 3 bis 28 Kohlenstoffatome aufweisende α-Olefin Propylen ist.

5. Verfahren nach Anspruch 1, wobei das Copolymer mit dem ungesättigten Material gepfropft wird, indem das Copolymer in dem aromatischen Ester gelöst wird und das ungesättigte Material und der Radikalstarter über einen Zeitraum von 0,1 bis 12 Stunden bei einer Temperatur von 25 bis 250 °C zugegeben werden.

6. Verfahren nach Anspruch 1, wobei das ungesättigte Material Maleinsäureanhydrid ist und das Amin N-(4-Anilinophenyl)-3-aminobutanamid ist.

7. Verfahren nach Anspruch 1, wobei das ungesättigte Material ein stickstoffhaltiges ethylenisch ungesättigtes Monomer ist.

8. Verfahren nach Anspruch 7, wobei das stickstoffhaltige Monomer aus der Gruppe ausgewählt ist, die aus Vinylpyridinen, Vinylpyrrolidonen, Vinylimidazolen und amingruppenhaltigen Acrylaten und Methacrylaten besteht.

## Revendications

1. Procédé comprenant le greffage en solution d'un polymère d'hydrocarbure préparé à partir d'au moins un hydrocarbure polymérisable en C₂ à C₂₈, ledit polymère ayant un poids moléculaire moyen en nombre dans la plage de 5 000 à 500 000, avec une matière d'acide carboxylique en C₃ à C₁₀ éthyléniquement insaturée, en utilisant un initiateur de radicaux libres, en présence d'une huile d'ester aromatique de formule 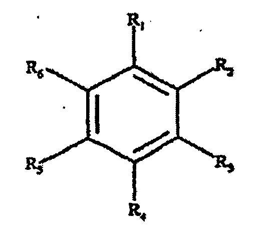 dans laquelle R₁, R₂, R₃, R₄, R₅ et R₆ sont choisis indépendamment parmi le groupe constitué de l'hydrogène, de -COOR₇, -COOR₈ , -COOR₉ , -COOR₁₀, -COOR₁₁ et -COOR₁₂ , à condition que pas plus de 5 parmi R₁, R₂, R₃, R₄, R₅ et R₆ soient l'hydrogène, et R₇, R₈, R₉, R₁₀, R₁₁ et R₁₂ sont choisis indépendamment parmi le groupe constitué d'alkyle et d'esters d'alkyle, où la portion aliphatique de l'ester aromatique est dérivée d'un alcool en C₄ à C₁₃ linéaire, comprenant une étape de dissolution de 5 à 95 % en poids du copolymère dans 95 à 5 % en poids de l'ester aromatique pour former une solution, la quantité de la matière insaturée est de 0,05 à 10 % en poids basé sur le poids de la solution, et la quantité de l'initiateur est de 0,005 à 10 % en poids basé sur le poids de la solution ; et après l'étape de greffage, une étape d'ajout de 40 à 500 % en poids basé sur le poids de la solution, d'une huile de lubrification minérale ou synthétique, et ensuite l'ajout d'une amine pour neutraliser l'acide et un chauffage à 100 °C jusqu'à 250 °C pendant 0,5 à 10 heures.

2. Procédé selon la revendication 1, dans lequel le polymère d'hydrocarbure est un copolymère d'éthylène avec une alpha-oléfine en C₃ à C₂₈.

3. Procédé selon la revendication 2, dans lequel le copolymère comprend de 15 à 90 pour-cent en poids d'éthylène et, de manière correspondante, de 85 à 10 pour-cent en poids de l'alpha-oléfine.

4. Procédé selon la revendication 2 ou 3, dans lequel l'alpha-oléfine en C₃ à C₂₈ est le propylène.

5. Procédé selon la revendication 1, dans lequel le copolymère est greffé avec la matière insaturée en dissolvant le copolymère dans l'ester aromatique et en ajoutant la matière insaturée et l'initiateur de radicaux libres sur 0,1 à 12 heures à une température de 25 ° C à 250 °C.

6. Procédé selon la revendication 1, dans lequel la matière insaturée est l'anhydride maléique et l'amine est N-(4-anilinophényl)-3-aminobutanamide.

7. Procédé selon la revendication 1, dans lequel la matière insaturée est un monomère éthyléniquement insaturé contenant de l'azote.

8. Procédé selon la revendication 7, dans lequel le monomère contenant de l'azote est choisi parmi le groupe constitué de vinylpyridines, de vinylpyrrolidones, de vinylimidazoles et de méthacrylates et d'acrylates contenant un groupe amine.
